# EUROPEAN PATENT APPLICATION

(11) **EP 4 325 757 A1**
(43) Date of publication of application: **21.02.2024**
(21) Application number: 22804930.0
(22) Date of filing: 16.05.2022
(51) Int. Cl.: H04L 1/18, H04L 1/16, H04W 76/15

(54) **METHOD AND DEVICE FOR TRANSMITTING AND RECEIVING RESPONSE FRAME IN COMMUNICATION SYSTEM SUPPORTING MULTIPLE LINKS**

(30) Priority: 17.05.2021 KR 20210063436
(71) Applicant: HYUNDAI MOTOR COMPANY, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR)
(74) Representative: Isarpatent
(86) International application number: PCT/KR2022/006982
(87) International publication number: WO 2022/245075

(57) **Abstract**

Disclosed are a method and device for transmitting and receiving a response frame in a wireless system supporting multiple links. A method of a first device comprises the steps of: performing a first backoff operation for a first AC in a first link; performing a second backoff operation for a second AC in a second link; "when the first backoff operation is completed and one or more conditions are met", transmitting, in the first link, a first data frame including one or more data units corresponding to the first AC and information indicating the transmission of an ML BA frame; when the second backoff operation is completed, transmitting, in the second link, a second data frame including one or more data units corresponding to the second AC; and receiving the ML BA frame after transmitting the second data frame in the second link.

## Description

### [Technical Field]

The present disclosure relates to a wireless local area network (LAN) communication technique, and more particularly, to a technique for transmission and reception of a response frame by a device that does not support simultaneous transmit and receive (STR) operations.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

The standards using the wireless LAN technology are being standardized as IEEE802.11 standards mainly in the Institute of Electrical and Electronics Engineers (IEEE). As the above-described wireless LAN technologies have been developed and spread, applications using the wireless LAN technologies have been diversified, and a demand for a wireless LAN technology supporting a higher throughput has arisen. Accordingly, a frequency bandwidth (e.g., `maximum 160 MHz bandwidth' or '80+80 MHz bandwidth') used in the IEEE 802.11ac standard has been expanded, and the number of supported spatial streams has also increased. The IEEE 802.11ac standard may be a very high throughput (VHT) wireless LAN technology supporting a high throughput of 1 gigabit per second (Gbps) or more. The IEEE 802.11ac standard can support downlink transmission for multiple stations by utilizing the MIMO techniques.

As applications requiring higher throughput and applications requiring real-time transmission occur, the IEEE 802.11be standard, which is an extreme high throughput (EHT) wireless LAN technology, is being developed. The goal of the IEEE 802.1 The standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

However, since multi-link operations are operations not defined in the existing wireless LAN standard, it may be necessary to define detailed operations according to an environment in which the multi-link operations are performed. In particular, when two or more links are adjacent, simultaneous transmit and receive (STR) operations may not be performed on a multi-link due to interference from adjacent links (e.g., adjacent bands, adjacent channels). If a level of signal interference between adjacent links is above a certain level, a channel sensing operation and/or signal reception operation for transmission on another link may not be performed due to the interference while a transmission operation is performed on one link. In the above-described situation, methods for transmitting and receiving data based on a channel access procedure considering a transmission and reception status of the one link may be required.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for transmission and reception of a response frame for a device that does not support STR operations in a communication system supporting multiple links.

### [Technical Solution]

A method of a first device, according to a first exemplary embodiment of the present disclosure for achieving the above-described objective, may comprise: performing a first backoff operation for a first access category (AC) on a first link; performing a second backoff operation for a second AC on a second link; in response to that the first backoff operation is completed and one or more conditions are satisfied, transmitting a first data frame on the first link, the first data frame including one or more data units corresponding to the first AC and information indicating transmission of a multi-link (ML) block acknowledgment (BA) frame; in response to that the second backoff operation is completed, transmitting a second data frame on the second link, the second data frame including one or more data units corresponding to the second AC; and receiving the ML BA frame after transmission of the second data frame on the second link.

The ML BA frame may include reception status information for the first data frame and reception status information for the second data frame.

When the first data frame is an Extreme High Throughput (EHT) frame, the information may be interpreted as indicating transmission of the ML BA frame.

The ML BA frame may include reception status information for some data units included in the first data frame and reception status information for all data units included in the second data frame.

The method may further comprise: receiving, on the first link, a BA frame including reception status information for remaining data units excluding the some data units among the one or more data units included in the first data frame.

The one or more conditions may include a condition in which a recipient of the first data frame and a recipient of the second data frame are same, a condition in which the recipient is a non-simultaneous transmit and receive (NSTR) device, a condition in which backoff operations are performed for ACs of data frames transmitted to the recipient, and a condition in which a transmission end time of the first data frame is before a transmission end time of the second data frame.

The one or more conditions may include at least one of a condition in which a difference between a transmission end time of the first data frame and a transmission end time of the second data frame is less than a threshold or a condition in which the transmission end time of the first data frame is before the transmission end time of the second data frame.

The one or more conditions may include at least one of a condition in which a difference between a transmission end time of the first data frame and a transmission end time of the second data frame is greater than or equal to a threshold or a condition in which the transmission end time of the first data frame is after the transmission end time of the second data frame.

A method of a first device, according to a second exemplary embodiment of the present disclosure for achieving the above-described objective, may comprise: receiving a first data frame on a first link; receiving a second data frame on a second link; in response to that the first data frame includes information indicating transmission of a multi-link (ML) block acknowledgment (BA) frame, generating an ML BA frame including first reception status information for the first data frame and second reception status information for the second data frame; and transmitting the ML BA frame on the second link.

When a reception end time of the first data frame is before a reception end time of the second data frame, transmission of the first reception status information may be delayed after reception of the second data frame.

When the first data frame is an Extreme High Throughput (EHT) frame, the information may be interpreted as indicating transmission of the ML BA frame.

The first reception status information may be reception status information for some data units included in the first data frame, and the second reception status information may be reception status information for all data units included in the second data frame.

The method may further comprise: transmitting, on the first link, a BA frame including reception status information for remaining data units excluding the some data units among all data units included in the first data frame.

A first device, according to a third exemplary embodiment of the present disclosure for achieving the above-described objective, may comprise: a processor; and a memory storing one or more instructions executable by the processor, wherein the one or more instructions are executed to perform: performing a first backoff operation for a first access category (AC) on a first link; performing a second backoff operation for a second AC on a second link; in response to that the first backoff operation is completed and one or more conditions are satisfied, transmitting a first data frame on the first link, the first data frame including one or more data units corresponding to the first AC and information indicating transmission of a multi-link (ML) block acknowledgment (BA) frame; in response to that the second backoff operation is completed, transmitting a second data frame on the second link, the second data frame including one or more data units corresponding to the second AC; and receiving the ML BA frame after transmission of the second data frame on the second link.

The ML BA frame may include reception status information for the first data frame and reception status information for the second data frame.

The ML BA frame may include reception status information for some data units included in the first data frame and reception status information for all data units included in the second data frame.

The one or more instructions may be further executed to perform: receiving, on the first link, a BA frame including reception status information for remaining data units excluding the some data units among the one or more data units included in the first data frame.

The one or more conditions may include a condition in which a recipient of the first data frame and a recipient of the second data frame are same, a condition in which the recipient is a non-simultaneous transmit and receive (NSTR) device, a condition in which backoff operations are performed for ACs of data frames transmitted to the recipient, and a condition in which a transmission end time of the first data frame is before a transmission end time of the second data frame.

The one or more conditions may include at least one of a condition in which a difference between a transmission end time of the first data frame and a transmission end time of the second data frame is less than a threshold or a condition in which the transmission end time of the first data frame is before the transmission end time of the second data frame.

The one or more conditions may include at least one of a condition in which a difference between a transmission end time of the first data frame and a transmission end time of the second data frame is greater than or equal to a threshold or a condition in which the transmission end time of the first data frame is after the transmission end time of the second data frame.

### [Advantageous Effects]

According to the present disclosure, communication between devices (e.g., stations, access points) may be performed using a multi-link. When some links (e.g., some channels) of the multi-link are adjacent, a simultaneous transmit and receive (STR) operation may not be performed. When a first device performs transmission using a first link and a second link of the multi-link, the first device may perform a transmission operation simultaneously using two links when channel access operations are completed on both the first link and the second link. Therefore, transmission efficiency can be improved.

### [Description of Drawings]

FIG. 1 is a block diagram illustrating a first exemplary embodiment of a communication node constituting a wireless LAN system.
FIG. 2 is a conceptual diagram illustrating a first exemplary embodiment of a multi-link configured between multi-link devices (MLDs).
FIG. 3 is a timing diagram illustrating a first exemplary embodiment of a method for data frame transmission and reception in a wireless LAN system supporting a multi-link.
FIG. 4 is a timing diagram illustrating a second exemplary embodiment of a method for data frame transmission and reception in a wireless LAN system supporting a multi-link.
FIG. 5 is a timing diagram illustrating a third exemplary embodiment of a method for data frame transmission and reception in a wireless LAN system supporting a multi-link.
FIG. 6 is a timing diagram illustrating a fourth exemplary embodiment of a method for data frame transmission and reception in a wireless LAN system supporting a multi-link.
FIG. 7 is a timing diagram illustrating a fifth exemplary embodiment of a method for data frame transmission and reception in a wireless LAN system supporting a multi-link.
FIG. 8 is a timing diagram illustrating a sixth exemplary embodiment of a method for data frame transmission and reception in a wireless LAN system supporting a multi-link.
FIG. 9 is a timing diagram illustrating a seventh exemplary embodiment of a method for data frame transmission and reception in a wireless LAN system supporting a multi-link.
FIG. 10 is a block diagram illustrating a first exemplary embodiment of a frame in a wireless LAN system supporting a multi-link.
FIG. 11 is a block diagram illustrating a first exemplary embodiment of a response frame in a wireless LAN system supporting a multi-link.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a `wireless communication network'.

In exemplary embodiments, 'configuration of an operation (e.g., transmission operation)' may mean that 'configuration information (e.g., information element(s), parameter(s)) for the operation' and/or `information indicating to perform the operation' is signaled. 'Configuration of an information element (e.g., parameter)' may mean that the information element is signaled. 'Configuration of a resource (e.g., resource region)' may mean that setting information of the resource is signaled.

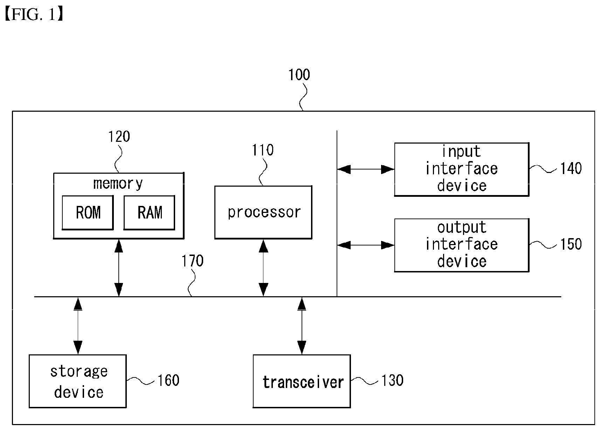

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. An access point may refer to `AP', and a station may refer to `STA' or 'non-AP STA'. An operating channel width supported by an AP may be 20 megahertz (MHz), 80MHz, 160MHz, or the like. An operating channel width supported by a STA may be 20MHz, 80MHz, or the like.

The communication node 100 may include at least one processor 110, a memory 120, and a transceiver 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The respective components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute program commands stored in at least one of the memory 120 and the storage device 160. The processor 110 may refer to a central processing unit (CPU), a graphics processing unit (GPU), or a dedicated processor on which the methods according to the exemplary embodiments of the present invention are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

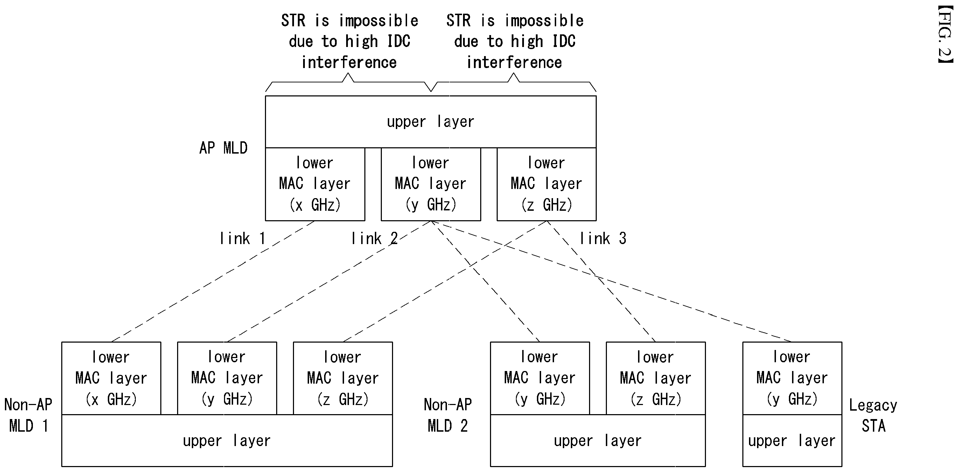

FIG. 2 is a conceptual diagram illustrating a first exemplary embodiment of a multi-link configured between multi-link devices (MLDs).

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or `lower entity'. The communication node (i.e., AP) may operate under control of an upper layer (or the processor 110 shown in FIG. 2). The non-AP MLD may include a plurality of STAs, and the plurality of STAs may operate in different links. Each of the plurality of STAs may be referred to as a 'communication node' or `lower entity'. The communication node (i.e., STA) may operate under control of an upper layer (or the processor 110 shown in FIG. 2).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between a link 1 and a link 2 in the frequency domain) is sufficient, the MLD may be able to perform an STR operation. For example, the MLD may transmit a physical layer convergence procedure (PLCP) protocol data unit (PPDU) 1 using the link 1 among multiple links, and may receive a PPDU 2 using the link 2 among multiple links. On the other hand, if the MLD performs an STR operation when the band separation between multiple links is not sufficient, in-device coexistence (IDC) interference, which is interference between the multiple links, may occur. Accordingly, when the bandwidth separation between multiple links is not sufficient, the MLD may not be able to perform an STR operation. A link pair having the above-described interference relationship may be a non-simultaneous transmit and receive (NSTR)-limited link pair. Here, the MLD may be referred to as `NSTR AP MLD' or `NSTR non-AP MLD'.

For example, a multi-link including a link 1, a link 2, and a link 3 may be configured between an AP MLD and a non-AP MLD 1. When a band separation between the link 1 and the link 3 is sufficient, the AP MLD may perform an STR operation using the link 1 and the link 3. That is, the AP MLD may transmit a frame using the link 1 and receive a frame using the link 3. When a band separation between the link 1 and the link 2 is insufficient, the AP MLD may not be able to perform an STR operation using the link 1 and the link 2. When a band separation between the link 2 and the link 3 is not sufficient, the AP MLD may not be able to perform an STR operation using the link 2 and the link 3.

Meanwhile, in a wireless LAN system, a negotiation procedure for a multi-link operation may be performed in an access procedure between a station and an access point.

A device (e.g., access point, station) that supports multiple links may be referred to as `multi-link device (MLD)'. An access point supporting multiple links may be referred to as `AP MLD', and a station supporting multiple links may be referred to as 'non-AP MLD' or 'STA MLD'. The AP MLD may have a physical address (e.g., MAC address) for each link. The AP MLD may be implemented as if an AP in charge of each link exists separately. A plurality of APs may be managed within one AP MLD. Therefore, coordination between a plurality of APs belonging to the same AP MLD may be possible. A STA MLD may have a physical address (e.g., MAC address) for each link. The STA MLD may be implemented as if a STA in charge of each link exists separately. A plurality of STAs may be managed within one STA MLD. Therefore, coordination between a plurality of STAs belonging to the same STA MLD may be possible.

For example, an AP1 of the AP MLD and a STA1 of the STA MLD may each be responsible for a first link and perform communication using the first link. An AP2 of the AP MLD and a STA2 of the STA MLD may each be responsible for a second link and perform communication using the second link. The STA2 may receive status change information for the first link on the second link. In this case, the STA MLD may collect information (e.g., status change information) received on the respective links, and control operations performed by the STA1 based on the collected information.

Hereinafter, data transmission and reception methods in a wireless LAN system will be described. Even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a STA is described, an AP corresponding thereto may perform an operation corresponding to the operation of the STA. Conversely, when an operation of an AP is described, a STA corresponding thereto may perform an operation corresponding to the operation of the AP. In exemplary embodiments, an operation of a STA may be interpreted as an operation of a STA MLD, an operation of a STA MLD may be interpreted as an operation of a STA, an operation of an AP may be interpreted as an operation of an AP MLD, and an operation of an AP MLD may be interpreted as an operation of an AP.

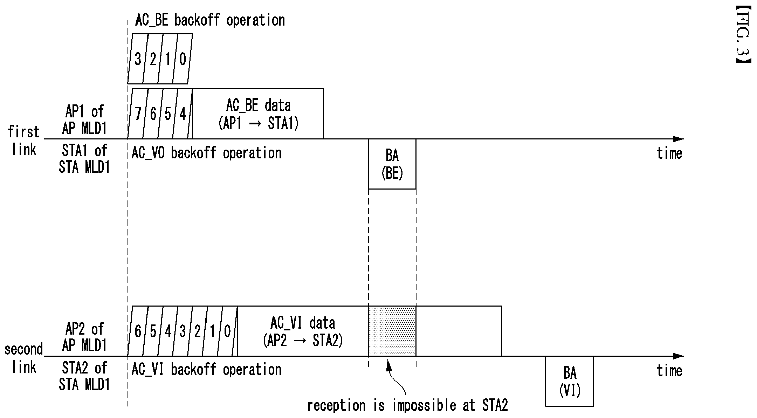

FIG. 3 is a timing diagram illustrating a first exemplary embodiment of a method for data frame transmission and reception in a wireless LAN system supporting a multi-link.

As shown in FIG. 3, an AP MLD that supports STR operations may be referred to as `STR AP MLD', and a non-AP MLD that does not support STR operations may be referred to as `NSTR non-AP MLD (or NSTR STA MLD)'. An AP MLD1 may be a STR AP MLD, and a STA MLD 1 may be an NSTR STA MLD. The AP MLD 1 may transmit and receive data frames with the STA MLD1 using a multi-link. An AP1 of the AP MLD1 and a STA1 of the STA MLD1 may operate on a first link, and an AP2 of the AP MLD1 and a STA2 of the STA MLD1 may operate on a second link. Each of the AP1 and the AP2 may perform a backoff operation to transmit a frame on each operating link.

Each MLD may perform the backoff operation independently on each of the first link and the second link. The backoff operations on the first link and the second link may be backoff operations for the same access category (AC). Alternatively, the backoff operations on the first link and the second link may be backoff operations for different ACs. A plurality of backoff operations (e.g., a plurality of backoff operations for a plurality of ACs) may be performed on one link. Value(s) of EDCA parameter(s) for backoff operations may be different for each AC. Priorities of ACs may be defined as in Table 1 below, and contention window (CWs) of ACs may be defined as in Table 2 below.

**[Table 1]**

| **Priority** | **AC** | **Description** |
|---|---|---|
| Lowest | AC_BK | Background |
| | AC_BE | Best effort |
| Highest | AC_VI | Video |
| | AC_VO | Voice |

**[Table 2]**

| **AC** | **CWₘᵢₙ** | **CWₘₐₓ** |
|---|---|---|
| AC_BK | 31 | 1023 |
| AC_BE | 31 | 1023 |
| AC_VI | 15 | 31 |
| AC_VO | 7 | 15 |

Counter values for the backoff operations on the first link and the second link may be selected independently. The counter value may mean a backoff counter value. The backoff operation may succeed first on one link (e.g., first link) among the first link and the second link. For example, a backoff operation may succeed first on a link (e.g., first link) for which a small backoff counter value is selected. A plurality of backoff operations for a plurality of AC data units may be performed simultaneously. Among the plurality of backoff operations, a backoff operation whose counter value reaches 0 first may be determined to be successful. When the backoff operation is successful (e.g., when the counter value becomes 0), the AP MLD1 may transmit a frame (e.g., data frame) including an AC data unit (e.g., AC_BE data unit) associated with the corresponding backoff operation at a boundary of a slot in which the counter value becomes 0. The AC data unit may refer to an AC_BK data unit, AC_BE data unit, AC_VI data unit, or AC_VO data unit. The data unit may refer to a PPDU and/or MAC protocol data unit (MPDU). A frame including the AC data unit may refer to an AC frame (e.g., AC_BK frame, AC_BE frame, AC_VI frame, AC_VO frame).

The backoff operation may succeed on the second link while the data frame is transmitted on the first link. In this case, the AP2 of the AP MLD1 may transmit a frame (e.g., data frame) including an AC data unit (e.g., AC_VI PPDU) associated with the corresponding backoff operation at a boundary of a slot in which the counter value becomes 0.

The STA MLD1 may receive the data frames on the multi-link (e.g., first link and second link). When reception of a data frame is completed on one link (e.g., first link) of the multi-link, the STA1 of the STA MLD1 may transmit a block acknowledgement (BA) frame (e.g., acknowledgement (ACK) frame) on the first link after a short interframe space (SIFS) elapses from a reception completion time of the data frame. In this case, the transmission operation of the BA frame on the first link and the reception operation of the data frame on the second link may be performed simultaneously. However, the STA MLD1 cannot perform an STR operation because it is an NSTR STA MLD. This is because a transmission power on the first link acts as interference on the second link, and decoding of the signal on the second link fails due to the interference. Therefore, while the BA frame is transmitted on the first link, the STA2 may not receive the data frame on the second link. A period in which the reception operation cannot be performed on the second link while the transmission operation is performed on the first link may be referred to as a blindness period. The STA2 may not receive a part of the data frame during the blindness period due to the interference caused by the frame transmission on the first link. In this case, a result of an error check (e.g., cyclic redundancy check (CRC)) on the data frame, which is performed in the STA2, may be a failure (e.g., error occurs).

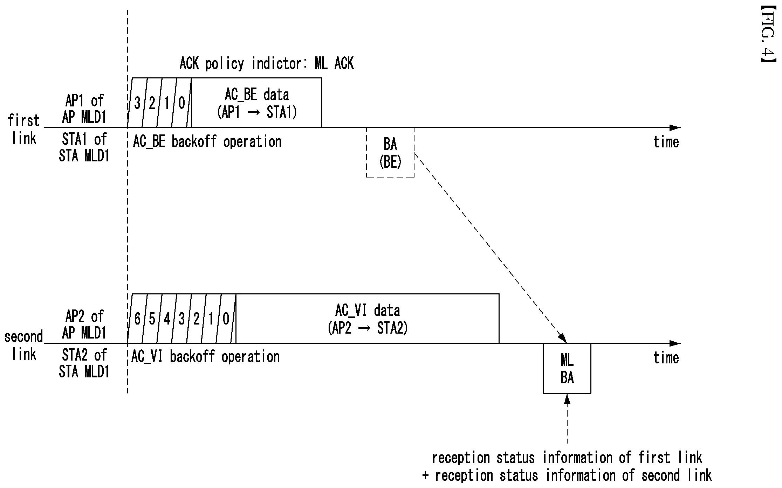

FIG. 4 is a timing diagram illustrating a second exemplary embodiment of a method for data frame transmission and reception in a wireless LAN system supporting a multi-link.

As shown in FIG. 4, an AP MLD that supports STR operations may be referred to as `STR AP MLD', and a non-AP MLD that does not support STR operations may be referred to as `NSTR non-AP MLD (or NSTR STA MLD)'. An AP MLD1 may be a STR AP MLD, and a STA MLD 1 may be an NSTR STA MLD. The AP MLD 1 may transmit and receive data frames with the STA MLD1 using a multi-link. An AP1 of the AP MLD1 and a STA1 of the STA MLD1 may operate on a first link, and an AP2 of the AP MLD1 and a STA2 of the STA MLD1 may operate on a second link. Each of the AP1 and the AP2 may perform a backoff operation to transmit a frame on each operating link.

The backoff operation may be performed independently on each of the first link and the second link. The backoff operations on the first link and the second link may be backoff operations for the same AC. Alternatively, the backoff operations on the first link and the second link may be backoff operations for different ACs. A plurality of backoff operations (e.g., a plurality of backoff operations for a plurality of ACs) may be performed on one link. Value(s) of EDCA parameter(s) for backoff operations may be different for each AC.

The backoff operation may succeed first on one link (e.g., first link) among the first link and the second link. For example, a backoff operation may succeed first on a link (e.g., first link) for which a small backoff counter value is selected. A plurality of backoff operations for a plurality of ACs may be performed simultaneously. Among the plurality of backoff operations, a backoff operation whose counter value reaches 0 first may be determined to be successful. When the backoff operation is successful (e.g., when the counter value becomes 0), the AP MLD1 may transmit a frame (e.g., data frame) including an AC data unit (e.g., AC_BE data unit) associated with the corresponding backoff operation at a boundary of a slot in which the counter value becomes 0.

The data frame transmitted on the first link may include an ACK policy indicator. To set the ACK policy indicator, the AP MLD1 may identify whether an operation of transmitting a data frame for another recipient (e.g., STA2) affiliated with the same NSTR STA MLD (e.g., STA MLD1) as the recipient (e.g., STA1) of the data frame transmitted on the first link is being performed on another link (e.g., second link). If an operation of transmitting a data frame for another recipient (e.g., STA2) affiliated with the same NSTR STA MLD (e.g., STA MLD1) as the recipient (e.g., STA1) of the data frame transmitted on the first link is not being performed on another link (e.g., second link), the AP MLD1 may additionally identify condition(s) below based on a backoff state and a queue state of the another link (e.g., second link).

Condition 1. Whether data to be transmitted to another recipient affiliated with the same NSTR STA MLD (e.g., a STA affiliated with the same NSTR STA MLD) as the recipient of the data frame transmitted on the first link is present in a queue of another link (e.g., second link)

Condition 2. Whether backoff operations corresponding to ACs (e.g., the same AC or different ACs) of data frames to be transmitted to STAs affiliated with the same NSTR STA MLD are performed

Condition 3. Whether transmission of a data frame on the first link is completed while a data frame is being transmitted on another link (e.g., second link), when the data frame(s) are transmitted due to success(es) of backoff operation(s)

When all three conditions described above are satisfied, the AP MLD1 may set an ACK policy indicator included in a MAC header of the data frame transmitted on the first link to a value indicating multi-link (ML) ACK. In exemplary embodiments, the value indicating ML ACK may be '01'. To set the value of the ACK policy indicator described above, the data frame may be an Extreme High Throughput (EHT) frame. If the data frame is an EHT frame, the ACK policy indicator set to '01' may indicate ML ACK (e.g., transmission of an ML BA frame). When the ACK policy indicator indicates ML ACK, this may indicate that some or all of reception statuses (e.g., ACK or NACK) for MPDUs included in the data frame (e.g., data frame configured in form of an aggregated (A)-MPDU) transmitted on the current link (e.g., first link) are transmitted and received on another link (e.g., second link). That is, when the ACK policy indicator indicates ML ACK, this may indicate that reception status information for data frames on multiple links is transmitted and received through one ML BA frame. In exemplary embodiments, the ML BA frame may refer to a BA frame that includes reception status information for frames received on multiple links (e.g., the current link and other link(s)).

The STA MLD1 may receive the data frame from the AP MLD1 on the first link, and may identify that the ACK policy indicator included in the MAC header of the data frame indicates ML ACK. If the data frame is an EHT frame, the STA MLD1 may interpret the ACK policy indicator as indicating ML ACK. In this case, the STA MLD1 may generate a response frame (e.g., ML response frame) including reception status information (e.g., information in form of a bitmap) for MPDU(s) included in the data frame received from the AP MLD1 on the first link and reception status information (e.g., information in form of a bitmap) for MPDU(s) included in the data frame received from the AP MLD1 on another link (e.g., second link). The data frames may be received from the same AP MLD1 on the first link and another link (e.g., second link). The STA MLD1 may transmit the response frame to the AP MLD1 on another link (e.g., second link). The response frame may be referred to as an ML ACK frame or an ML BA frame. When reception status information for some MPDUs is transmitted, the response frame may include reception status information for MPDU(s) that have been normally received up to a time of transmitting the response frame.

In the exemplary embodiment of FIG. 4, when a channel access operation (e.g., backoff operation) is successful on the first link, the AP1 of the AP MLD1 may identify whether the three conditions described above (e.g., condition 1, condition 2, and condition 3) are satisfied, before transmission of the data frame. When there is an AC_VI data unit to be transmitted to the STA2 of the STA MLD1 in a queue of the second link, since the STA2, which is a recipient of the data frame on the second link, and the STA1, which is a recipient of the data frame on the first link, are affiliated with the same STA MLD1, the AP MLD1 may determine that the condition 1 is satisfied.

Since a backoff operation for AC_BE is performed on the first link, and a backoff operation for AC_VI is performed on the second link, the AP MLD1 may determine that the condition 2 is satisfied. Since transmission of a AC_BE data frame ends on the first link while a AC_VI data frame is transmitted on the second link, the AP MLD1 may determine that the condition 3 is satisfied. When the condition 1, condition 2, and condition 3 are all satisfied, the AP MLD1 may set the ACK policy indicator included in the MAC header of the data frame (e.g., EHT frame) transmitted on the first link to indicate ML ACK.

When the ACK policy indicator included in the MAC header of the data frame transmitted on the first link indicates ML ACK, this may indicate that reception status information for some or all of MPDUs included in the data frame is transmitted and received on another link. Since the STA MLD1 receiving the data frame is an NSTR STA MLD, the AP MLD1 may not expect to receive a response frame (e.g., BA frame, ACK frame) for the data frame immediately after transmission of the data frame on the first link. That is, the AP MLD1 may expect that an ML ACK frame received on the second link after transmission of the data frame ends on the second link includes reception status information for the data frame transmitted on the first link and reception status information for the data frame transmitted on the second link.

The backoff operation on the second link may succeed during transmission of the data frame on the first link. In this case, the AP2 of the AP MLD1 may transmit a data frame including an AC data unit (e.g., AC_VI data unit) associated with the corresponding backoff operation at a boundary of a slot in which the counter value becomes 0. The data frame transmitted on the second link may include an ACK policy indicator. To set the ACK policy indicator, the AP MLD1 may identify whether an operation of transmitting a data for another recipient (e.g., STA1) affiliated with the same NSTR STA MLD (e.g., STA MLD1) as the recipient (e.g., STA2) of the data frame transmitted on the second link is being performed on the first link. When the operation of transmitting a data for another recipient (e.g., STA1) affiliated with the same NSTR STA MLD (e.g., STA MLD1) as the recipient (e.g., STA2) of the data frame transmitted on the second link is being performed on the first link, the AP MLD1 may additionally check a condition below.

Condition 4. Whether transmission of the data frame on the second link ends during transmission of the data frame on the first link

If the condition 4 is not satisfied, the AP MLD1 may not set the ACK policy indicator included in the MAC header of the data frame transmitted on the second link to the value indicating ML ACK (e.g., '01'). That is, the AP MLD1 may set the ACK policy indicator included in the MAC header of the data frame transmitted on the second link to a value indicating BA (e.g., normal BA). In the exemplary embodiment of FIG. 4, since a transmission end time of the data frame on the second link is after a transmission end time of the data frame on the first link, the condition 4 is not satisfied. Accordingly, the AP MLD1 may not set the ACK policy indicator included in the MAC header of the data frame transmitted on the second link to the value indicating ML ACK.

When reception of the data frame is completed on one link (e.g., first link) of the links on which data frames are received, and the ACK policy indicator included in the MAC header of the received data frame indicates ML ACK, the STA MLD 1, which is an NSTR STA MLD, may not transmit a response frame (e.g., BA frame) for the data frame after a SIFS elapses on the first link, and may wait for (or delay) transmission of the response frame until reception of a data frame is completed on another link (e.g., second link). When reception of the data frame is completed on the second link, the STA MLD1 may transmit an ML BA frame, which is a response frame, to the AP MLD1 after a SIFS elapses from a reception end time of the data frame on the second link. The ML BA frame may include reception status information for the data frame received on the first link and reception status information for the data frame received on the second link. That is, the ML BA frame may include reception status information (e.g., ACK or NACK) of MPDUs included in data frames received on a plurality of links. Accordingly, the STA MLD 1 may not transmit a response frame for the data frame received on the first link.

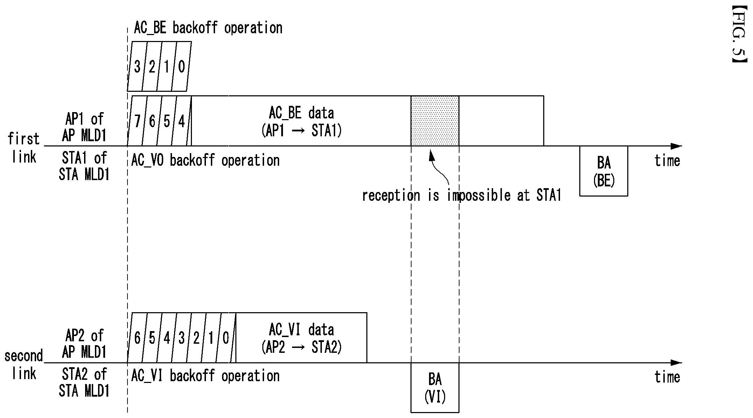

FIG. 5 is a timing diagram illustrating a third exemplary embodiment of a method for data frame transmission and reception in a wireless LAN system supporting a multi-link.

As shown in FIG. 5, an AP MLD that supports STR operations may be referred to as `STR AP MLD', and a non-AP MLD that does not support STR operations may be referred to as `NSTR non-AP MLD (or NSTR STA MLD)'. An AP MLD1 may be a STR AP MLD, and a STA MLD 1 may be an NSTR STA MLD. The AP MLD 1 may transmit and receive data frames with the STA MLD1 using a multi-link. An AP1 of the AP MLD1 and a STA1 of the STA MLD1 may operate on a first link, and an AP2 of the AP MLD1 and a STA2 of the STA MLD1 may operate on a second link. Each of the AP1 and the AP2 may perform a backoff operation to transmit a frame on each operating link.

The backoff operation may be performed independently on each of the first link and the second link. The backoff operations on the first link and the second link may be backoff operations for the same AC. Alternatively, the backoff operations on the first link and the second link may be backoff operations for different ACs. A plurality of backoff operations (e.g., a plurality of backoff operations for a plurality of ACs) may be performed on one link. Value(s) of EDCA parameter(s) for backoff operations may be different for each AC.

The backoff operation may succeed first on one link (e.g., first link) among the first link and the second link. For example, a backoff operation may succeed first on a link (e.g., first link) for which a small backoff counter value is selected. A plurality of backoff operations for a plurality of ACs may be performed simultaneously. Among the plurality of backoff operations, a backoff operation whose counter value reaches 0 first may be determined to be successful. When the backoff operation is successful (e.g., when the counter value becomes 0), the AP MLD1 may transmit a frame (e.g., data frame) including an AC data unit (e.g., AC_BE data unit) associated with the corresponding backoff operation at a boundary of a slot in which the counter value becomes 0.

The backoff operation may succeed on the second link while the data frame is transmitted on the first link. In this case, the AP2 of the AP MLD1 may transmit a frame (e.g., data frame) including an AC data unit (e.g., AC_VI PPDU and/or AC_VI MPDU), which is a target of the backoff operation, at a boundary of a slot in which the backoff counter value becomes 0. The data frame on the first link and the data frame on the second link may be transmitted to the same STA MLD (e.g., STA MLD1). The STA MLD1 may be an NSTR STA MLD.

The STA MLD1 may receive the data frames on the multi-link (e.g., first link and second link). When reception of a data frame is completed on one link (e.g., second link) of the multi-link, the STA2 of the STA MLD1 may transmit a BA frame on the second link after a SIFS elapses from a reception completion time of the data frame. In this case, the transmission operation of the BA frame on the second link and the reception operation of the data frame on the first link may be performed simultaneously. However, the STA MLD1 may not be able to perform an STR operation because it is an NSTR STA MLD. Therefore, while the BA frame is transmitted on the second link, the STA1 may not receive the data frame on the first link. This is because a transmission power on the second link acts as interference on the first link, and decoding of the signal on the first link fails due to the interference. A period in which the reception operation cannot be performed on the first link while the transmission operation is performed on the second link may be referred to as a blindness period. The STA1 may not receive a part of the data frame during the blindness period due to the interference caused by the transmission of the frame on the second link. In this case, a result of an error check (e.g., CRC) on the data frame, which is performed in the STA1, may be a failure (e.g., error occurs).

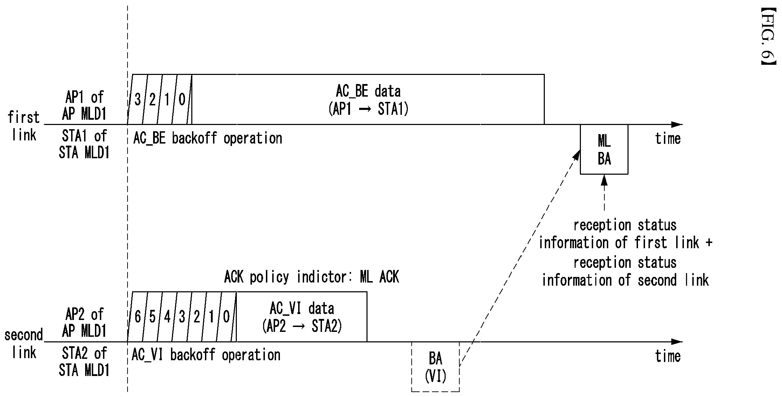

FIG. 6 is a timing diagram illustrating a fourth exemplary embodiment of a method for data frame transmission and reception in a wireless LAN system supporting a multi-link.

As shown in FIG. 6, an AP MLD that supports STR operations may be referred to as `STR AP MLD', and a non-AP MLD that does not support STR operations may be referred to as `NSTR non-AP MLD (or NSTR STA MLD)'. An AP MLD1 may be a STR AP MLD, and a STA MLD 1 may be an NSTR STA MLD. The AP MLD 1 may transmit and receive data frames with the STA MLD1 using a multi-link. An AP1 of the AP MLD1 and a STA1 of the STA MLD1 may operate on a first link, and an AP2 of the AP MLD1 and a STA2 of the STA MLD1 may operate on a second link. Each of the AP1 and the AP2 may perform a backoff operation to transmit a frame on each operating link.

The backoff operation may be performed independently on each of the first link and the second link. The backoff operations on the first link and the second link may be backoff operations for the same AC. Alternatively, the backoff operations on the first link and the second link may be backoff operations for different ACs. A plurality of backoff operations (e.g., a plurality of backoff operations for a plurality of ACs) may be performed on one link. Value(s) of EDCA parameter(s) for backoff operations may be different for each AC.

The backoff operation may succeed first on one link (e.g., first link) among the first link and the second link. For example, a backoff operation may succeed first on a link (e.g., first link) for which a small backoff counter value is selected. A plurality of backoff operations for a plurality of ACs may be performed simultaneously. Among the plurality of backoff operations, a backoff operation whose counter value reaches 0 first may be determined to be successful. When the backoff operation is successful (e.g., when the counter value becomes 0), the AP MLD1 may transmit a frame (e.g., data frame) including an AC data unit (e.g., AC_BE data unit) associated with the corresponding backoff operation at a boundary of a slot in which the counter value becomes 0.

The data frame transmitted on the first link may include an ACK policy indicator. To set the ACK policy indicator, the AP MLD1 may identify whether an operation of transmitting a data frame for another recipient (e.g., STA2) affiliated with the same NSTR STA MLD (e.g., STA MLD1) as the recipient (e.g., STA1) of the data frame transmitted on the first link is being performed on another link (e.g., second link). If an operation of transmitting a data frame for another recipient (e.g., STA2) affiliated with the same NSTR STA MLD (e.g., STA MLD1) as the recipient (e.g., STA1) of the data frame transmitted on the first link is not being performed on another link (e.g., second link), the AP MLD1 may additionally identify condition(s) below based on a backoff state and a queue state of the another link (e.g., second link).

Condition 1. Whether data to be transmitted to another recipient affiliated with the same NSTR STA MLD as the recipient of the data frame transmitted on the first link is present in a queue of another link (e.g., second link)

Condition 2. Whether backoff operations corresponding to ACs (e.g., the same AC or different ACs) of data frames to be transmitted to STAs affiliated with the same NSTR STA MLD are performed

Condition 3. Whether transmission of a data frame on the first link is completed while a data frame is being transmitted on another link (e.g., second link), when the data frame(s) are transmitted due to success(es) of backoff operation(s)

When at least one of the three conditions described above is not satisfied, the AP MLD1 may not set the ACK policy indicator included in the MAC header of the data frame transmitted on the first link to the value indicating ML ACK (e.g., '01'). In exemplary embodiments, the value indicating ML ACK may be '01'. In the exemplary embodiment of FIG. 6, since a transmission end time of the data frame on the first link is after a transmission end time of the data frame on the second link, the condition 3 is not satisfied. Accordingly, the AP MLD1 may not set the ACK policy indicator included in the MAC header of the data frame transmitted on the first link to the value indicating ML ACK.

The backoff operation on the second link may succeed during transmission of the data frame on the first link. In this case, the AP2 of the AP MLD1 may transmit a data frame including an AC data unit (e.g., AC_VI data unit) associated with the corresponding backoff operation at a boundary of a slot in which the counter value becomes 0. The MLD (e.g., STA MLD1) that is a recipient of the data frame transmitted on the second link may be the same as the MLD that is a recipient of the data frame transmitted on the first link. The STA MLD1 may be an NSTR STA MLD. The data frame transmitted on the second link may include an ACK policy indicator. To set the ACK policy indicator, the AP MLD1 may identify whether an operation of transmitting a data frame for another recipient (e.g., STA1) affiliated with the same NSTR STA MLD (e.g., STA MLD1) as a recipient (e.g., STA2) of the data frame transmitted on the second link is being performed on the first link. If an operation of transmitting a data frame for another recipient (e.g., STA1) affiliated with the same NSTR STA MLD (e.g., STA MLD1) as a recipient (e.g., STA2) of the data frame transmitted on the second link is being performed on the first link, the AP MLD1 may additionally check a condition below.

Condition 4. Whether transmission of the data frame on the second link ends during transmission of the data frame on the first link.

If the condition 4 is satisfied, the AP MLD1 may set the ACK policy indicator included in the MAC header of the data frame transmitted on the second link to the value indicating ML ACK (e.g., '01'). To set the value of the ACK policy indicator described above, the data frame may be an EHT frame. That is, if the data frame is an EHT frame, the ACK policy indicator set to '01' may be interpreted as indicating ML ACK. When the ACK policy indicator indicates ML ACK, this may indicate that some or all of reception statues (e.g., ACK or NACK) for MPDUs included in the data frame (e.g., data frame configured in form of an A-MPDU) transmitted on the current link (e.g., the second link) are transmitted and received on another link (e.g., first link).

The STA MLD1 may receive the data frame from the AP MLD1 on the second link, and may identify that the ACK policy indicator included in the MAC header of the data frame indicates ML ACK. In this case, the STA MLD1 may generate a response frame (e.g., ML BA frame) including reception status information (e.g., information in form of a bitmap) for MPDU(s) included in the data frame received from the AP MLD1 on the second link and reception status information (e.g., information in form of a bitmap) for MPDU(s) included in the data frame received from the AP MLD1 on another link (e.g., first link). The data frames on the second link and another link (e.g., first link) may be received from the same AP MLD1. The STA MLD1 may transmit the ML response frame to the AP MLD1 on another link (e.g., first link). When reception status information for some MPDUs is transmitted, the ML response frame may include reception status information for MPDU(s) that have been normally received up to a time of transmitting the ML response frame.

In the exemplary embodiment of FIG. 6, when a channel access operation (e.g., backoff operation) succeeds on the second link, the AP2 of the AP MLD1 may identify whether the above-described condition 4 is satisfied, before transmitting the data frame. Since a transmission end time of the data frame on the second link is before a transmission end time of the data frame on the first link (e.g., since the transmission of the data frame on the second link ends during the transmission of the data frame on the first link), the AP MLD1 may determine that the condition 4 is satisfied, and may set the ACK policy indicator included in the MAC header of the data frame transmitted on the second link to the value indicating ML ACK (e.g., '01').

When reception of a data frame is completed on one link (e.g., second link) of the links on which data frames are received, and the ACK policy indicator included in the MAC header of the received data frame indicates ML ACK, the STA MLD1, which is an NSTR STA MLD, may not transmit a response frame (e.g., BA frame) for the data frame on the second link after a SIFS elapses, and may wait for (or delay) transmission of a response frame until reception of the data frame on another link (e.g., first link) is completed. When reception of the data frame is completed on the first link, the STA MLD1 may transmit an ML BA frame, which is a response frame, to the AP MLD1 after a SIFS elapses from the reception end time of the data frame on the first link. The ML BA frame may include reception status information for the data frame received on the first link and reception status information for the data frame received on the second link. That is, the ML BA frame may include reception status information (e.g., ACK or NACK) of MPDUs included in data frames received on a plurality of links.

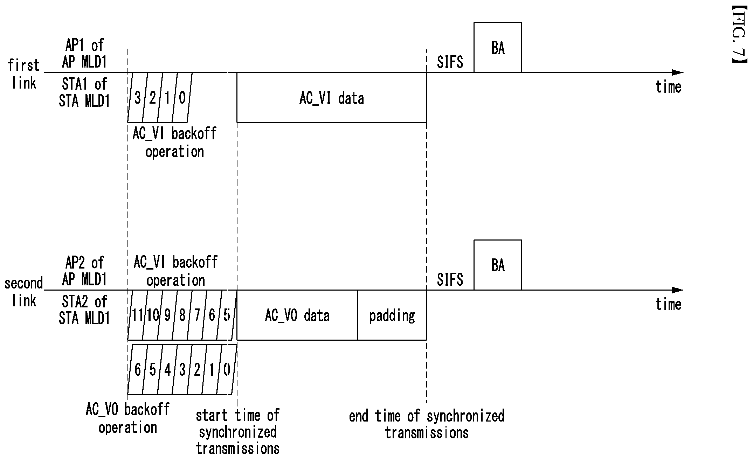

FIG. 7 is a timing diagram illustrating a fifth exemplary embodiment of a method for data frame transmission and reception in a wireless LAN system supporting a multi-link.

As shown in FIG. 7, an AP MLD that supports STR operations may be referred to as `STR AP MLD', and a non-AP MLD that does not support STR operations may be referred to as `NSTR non-AP MLD (or NSTR STA MLD)'. An AP MLD1 may be a STR AP MLD, and a STA MLD 1 may be an NSTR STA MLD. The AP MLD 1 may transmit and receive data frames with the STA MLD1 using a multi-link. A STA1 of the STA MLD1 may operate on a first link, and a STA2 of the STA MLD1 may operate on a second link. Each of the STA1 and the STA2 may perform a backoff operation to transmit a frame (e.g., synchronized frame) on each operating link.

The backoff operation may be an enhanced distributed channel access function (EDCAF). The backoff operations performed for synchronized frame transmission may be backoff operations for the same AC on both the first link and the second link, and the same EDCA parameter(s) may be used for the backoff operations. EDCA parameters may be CW[AC] and/or QSRC[AC]. CW[AC] may be a CW for each AC. QSRC[AC] may be a quality of service (QoS) short retry counter (QSRC) for each AC. The counter values for the backoff operations on the first link and the second link may be selected independently. The backoff operation may succeed first on one link of the first link and the second link. For example, the backoff counter value may become 0 on a link (e.g., first link) for which a small backoff counter value is selected, so that the backoff operation may succeed first. The backoff counter value on the link (e.g., first link) where the backoff operation succeeds first may be maintained at 0 until the backoff operation succeeds on another link (e.g., second link). That is, transmission on the first link may be delayed (e.g., waited).

A backoff operation for AC_VO data (e.g., AC_VO data unit) (hereinafter, referred to as 'AC_VO backoff operation') also may be performed on another link (e.g., second link) in which a backoff operation for AC_VI data (e.g., AC_VI data unit) (hereinafter, referred to as 'AC_VI backoff operation') is performed. That is, the AC_VI backoff operation and the AC_VO backoff operation may be performed together on the second link. Before the AC_VI backoff operation is completed (e.g., the backoff counter value becomes 0 and the backoff operation succeeds), the AC_VO backoff operation may be completed first (e.g., the backoff counter value becomes 0 and the backoff operation succeeds). While the backoff operation is completed on the first link and the counter value is maintained at 0, the backoff operation (e.g., AC_VO backoff operation) may be completed on the second link. In this case, since the AC_VI backoff operation is successful on the first link and the AC_VO backoff operation is successful on the second link, the STA MLD1 may perform a transmission operation of an AC_VI frame (e.g., a frame including the AC_VI data) on the first link and a transmission operation of an AC_VO frame (e.g., a frame including the AC_VO data) on the second link at a time when the counter value of the AC_VO backoff operation on the second link becomes 0. That is, the STA 2 of the second link may select to transmit the AC_VO frame. Accordingly, the AC_VI frame and AC_VO frame may be transmitted simultaneously on the first link and the second link.

When the lengths of the frames transmitted on the first link and the second link are different and/or when modulation and coding schemes (MCSs) applied to the frames on the first link and the second link are different, frame transmission completion times of the first link and the second link may be different. For synchronized transmissions of the first link and the second link, it may be necessary to set the frame transmission completion times to be the same. Padding bit(s) may be added to a frame having a shorter length so that the frame transmission completion times are the same on the first link and the second link. Alternatively, the STA MLD1 (e.g., STA) may configure the frame in form of an A-MPDU instead of adding padding bit(s) so that the frame transmission completion times of the first link and the second link are the same. As another method, the STA MLD1 (e.g., STA) may transmit a dummy signal so that the frame transmission completion times of the first link and the second link are the same. The AP1 of the AP MLD1 may receive the AC_VI frame from the STA1 and may transmit a BA frame on the first link after a SIFS elapses from a reception completion time of the AC_VI frame. The AP2 of the AP MLD1 may receive the AC_VO frame (e.g., AC_VO PPDU + padding bit(s)) from the STA2, and may transmit a BA frame on the second link after a SIFS elapses from a reception completion time of the AC_VO frame.

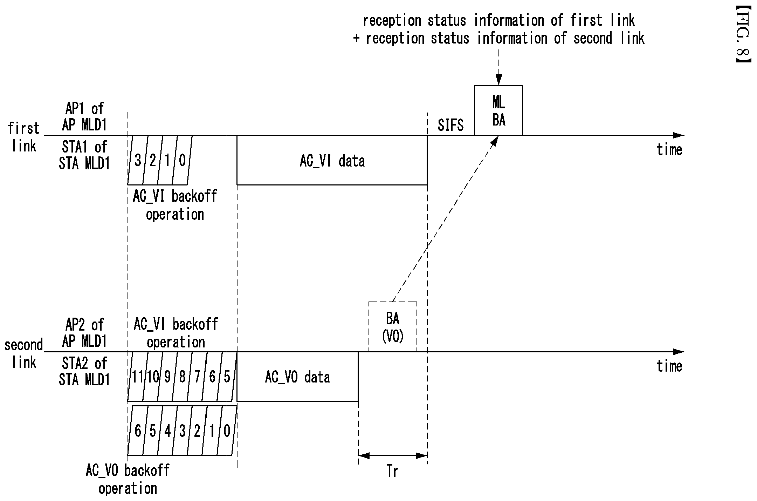

FIG. 8 is a timing diagram illustrating a sixth exemplary embodiment of a method for data frame transmission and reception in a wireless LAN system supporting a multi-link.

As shown in FIG. 8, an AP MLD that supports STR operations may be referred to as `STR AP MLD', and a non-AP MLD that does not support STR operations may be referred to as `NSTR non-AP MLD (or NSTR STA MLD)'. An AP MLD1 may be a STR AP MLD, and a STA MLD 1 may be an NSTR STA MLD. The AP MLD 1 may transmit and receive data frames with the STA MLD1 using a multi-link. A STA1 of the STA MLD1 may operate on a first link, and a STA2 of the STA MLD1 may operate on a second link. Each of the STA1 and the STA2 may perform a backoff operation to transmit a frame (e.g., synchronized frame) on each operating link.

The backoff operation may be an EDCAF. The backoff operations performed for synchronized frame transmission may be backoff operations for the same AC on both the first link and the second link, and the same EDCA parameter(s) may be used for the backoff operations. The counter values for the backoff operations on the first link and the second link may be selected independently. The backoff operation may succeed first on one of the first link and the second link. For example, the backoff counter value may become 0 on a link (e.g., first link) for which a small backoff counter value is selected, so that the backoff operation may succeed first. The backoff counter value on the link (e.g., first link) where the backoff operation succeeds first may be maintained at 0 until the backoff operation succeeds on another link (e.g., second link). That is, transmission on the first link may be delayed (e.g., waited).

An AC_VO backoff operation may also be performed on another link (e.g., second link) where an AC_VI backoff operation is performed. That is, the AC_VI backoff operation and the AC_VO backoff operation may be performed together on the second link. Before the AC_VI backoff operation is completed (e.g., the backoff counter value becomes 0 and succeeds), the AC_VO backoff operation may be completed first (e.g., the backoff counter value becomes 0 and the backoff operation succeeds). While the backoff operation is completed on the first link and the counter value is maintained at 0, the backoff operation (e.g., AC_VO backoff operation) may be completed on the second link. In this case, since the AC_VI backoff operation is successful on the first link and the AC_VO backoff operation is successful on the second link, the STA MLD1 may perform a transmission operation of an AC_VI frame (e.g., a frame including AC_VI data) on the first link and a transmission operation of an AC_VO frame (e.g., a frame including AC_VO data) on the second link at a time when the counter value of the AC_VO backoff operation on the second link becomes 0. That is, the STA 2 of the second link may select to transmit the AC_VO frame. Accordingly, the AC_VI frame and AC_VO frame may be transmitted simultaneously on the first link and the second link. When the lengths of the frames transmitted on the first link and the second link are different and/or when MCSs applied to the frames on the first link and the second link are different, frame transmission completion times of the first link and the second link may be different.

A MAC header of a simultaneously transmitted data frame may include an ACK policy indicator. To set the ACK policy indicator to ML ACK (e.g., '01'), all or some of data frames simultaneously transmitted on the respective links may be EHT frames. If the ACK policy indicator is set to the value indicating ML ACK (e.g., '01'), this may indicate that reception status information for all or some of MPDUs included in the data frame (e.g., data frame configured in form of an A-MPDU) transmitted on the current link (e.g., first link) are transmitted and received on another link (e.g., second link). To set the ACK policy indicator to ML ACK, it may be identified whether the STA MLD1 performing the transmission operation is an NSTR STA MLD. When the STA MLD1 is an NSTR STA MLD, and transmission of only some of simultaneously transmitted data frames is completed (i.e., when a data frame reception operation is performed on another link), the AP MLD1 may not transmit a response frame (e.g., BA frame, ACK frame) for the data frame. The STA MLD1, which is an NSTR STA MLD, may set the ACK policy indicator included in the MAC header of the data frame with an early transmission end time among the data frames to the value indicating ML ACK. Padding bit(s) may not be added to the data frame with an early transmission end time.

When the STA MLD1 is not an NSTR STA MLD (i.e., when the STA MLD1 is a STR STA MLD), the STA MLD1 may calculate Tr, which is a difference between the transmission end times of the data frames simultaneously transmitted on the first link and the second link, and set the ACK policy indicator according to a value of Tr. In this case, the padding operation to match the transmission end times of the data frames on the first link and the second link may not be performed. If Tr is less than a preset threshold, reception status information (e.g., ACK or NACK) of the data frame with an early transmission end time may be transmitted together with reception status information of the data frame with a late transmission end time. That is, an ML BA frame may be transmitted as including reception status information of the data frame with an early transmission end time and reception status information of the data frame with a late transmission end time. For the above-described operation, the STA MLD 1 may set the ACK policy indicator included in the MAC header of the data frame with an early transmission end time to the value indicating ML ACK, and transmit the data frame to the AP MLD1.

If Tr is greater than or equal to a preset threshold, the AP MLD1 may transmit a response frame (e.g., ML BA frame) including reception status information of the data frame with an early transmission end time and reception status information of the data frame received on another link up to a time of transmitting the response frame for the data frame with an early transmission end time. The AP MLD1 may transmit reception status information for some of MPDUs included in the data frame. For the above-described operation, the STA MLD1 may set the ACK policy indicator included in the MAC header of the data frame with a late transmission end time to the value indicating ML ACK, and transmit the data frame. In this case, padding bit(s) may not be added to the data frame with an early transmission end time.

Alternatively, in the STA MLD 1, which is a STR STA MLD, the ACK policy indicator may be set without considering Tr. Without considering Tr, the STA MLD1, which is an NSTR STA MLD, may set the ACK policy indicator included in the MAC header of the data frame with an early transmission end time to the value indicating ML ACK, and transmit the data frame. When the ACK policy indicator indicates ML ACK, this may indicate that reception status information for the data frame with an early transmission end time is transmitted and received together with reception status information for the data frame with a late transmission end time transmitted on another link.

In a synchronized transmission procedure, the ACK policy indicator may be set without considering Tr. Without considering Tr, the STA MLD1, which is an NSTR STA MLD, may set the ACK policy indicator included in the MAC header of the data frame with an early transmission end time to the value indicating ML ACK, and transmit the data frame. When the ACK policy indicator indicates ML ACK, this may indicate that reception status information for the data frame with an early transmission end time is transmitted and received together with reception status information for the data frame transmitted on another link with a late transmission end time.

In the exemplary embodiment of FIG. 8, the STA MLD1 may perform the ACK policy indicator setting procedure to perform synchronized transmissions using the first link and the second link. The STA MLD1 may be an NSTR STA MLD. In this case, the STA MLD1 may set the ACK policy indicator included in the MAC header of the data frame with an early transmission end time (e.g., data frame transmitted on the second link) to the value indicating ML ACK, and transmit the data frame on the second link. A padding operation may not be performed on the data frame with an early transmission end time.

When the STA MLD1 is a STR STA MLD, the STA MLD1 may calculate Tr, which is a difference between the transmission end times of the data frames simultaneously transmitted on the first link and the second link. If Tr is less than a preset threshold, the STA MLD1 may set the ACK policy indicator included in the MAC header of the data frame with an early transmission end time (e.g., data frame transmitted on the second link) to the value indicating ML ACK, and transmit the data frame on the second link. The AP MLD1 may receive the data frame on the second link and identify that the ACK policy indicator included in the MAC header of the data frame indicates ML ACK. In this case, the AP MLD1 may generate a response frame (e.g., ML BA frame) for the data frame received on the first link with a late transmission end time. The response frame (e.g., ML BA frame) may include reception status information for the data frame received on the first link and reception status information for the data frame received on the second link.

If Tr is greater than or equal to a preset threshold, the STA MLD1 may set the ACK policy indicator included in the MAC header of the data frame with a late transmission end time (e.g., data frame transmitted on the first link) to the value indicating ML ACK, and transmit the data frame on the first link. The AP MLD1 may receive the data frame on the first link and identify that the ACK policy indicator included in the MAC header of the data frame indicates ML ACK. In this case, the AP MLD1 may generate a response frame (e.g., ML BA frame) for the data frame received on the second link with an early transmission end time. The response frame (e.g., ML BA frame) may include reception status information for a portion (e.g., some MPDUs) of the data frame received on the first link and reception status information for the data frame received on the second link.

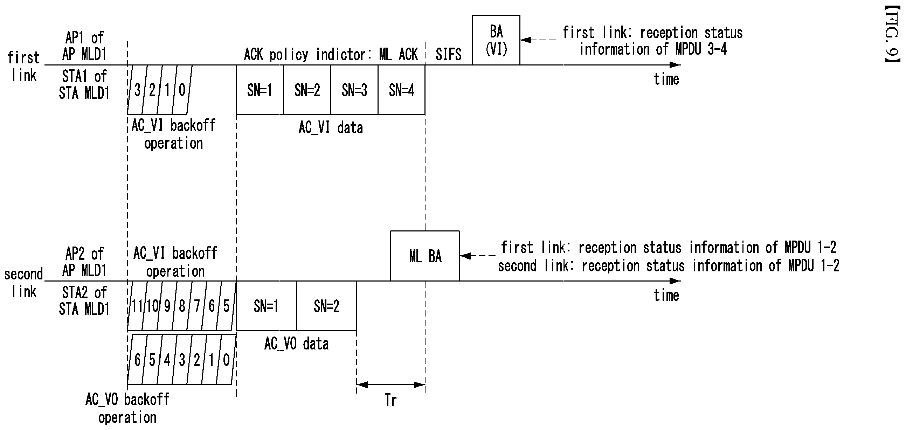

FIG. 9 is a timing diagram illustrating a seventh exemplary embodiment of a method for data frame transmission and reception in a wireless LAN system supporting a multi-link.

As shown in FIG. 9, an AP MLD that supports STR operations may be referred to as 'STR AP MLD', and a non-AP MLD that does not support STR operations may be referred to as 'NSTR non-AP MLD (or NSTR STA MLD)'. An AP MLD1 may be a STR AP MLD, and a STA MLD 1 may be an NSTR STA MLD. The AP MLD 1 may transmit and receive data frames with the STA MLD1 using a multi-link. A STA1 of the STA MLD1 may operate on a first link, and a STA2 of the STA MLD1 may operate on a second link. Each of the STA1 and the STA2 may perform a backoff operation to transmit a frame (e.g., synchronized frame) on each operating link.

The backoff operation may be an EDCAF. The backoff operations performed for synchronized frame transmission may be backoff operations for the same AC on both the first link and the second link, and the same EDCA parameter(s) may be used for the backoff operations. The counter values for the backoff operations on the first link and the second link may be selected independently. The backoff operation may succeed first on one of the first link and the second link. For example, the backoff counter value may become 0 on a link (e.g., first link) for which a small backoff counter value is selected, so that the backoff operation may succeed first. The backoff counter value on the link (e.g., first link) where the backoff operation succeeded first may be maintained at 0 until the backoff operation succeeds on another link (e.g., second link). That is, transmission on the first link may be delayed (e.g., waited).

An AC_VO backoff operation may also be performed on another link (e.g., second link) where an AC_VI backoff operation is performed. That is, the AC_VI backoff operation and the AC_VO backoff operation may be performed together on the second link. Before the AC_VI backoff operation is completed (e.g., the backoff counter value becomes 0 and succeeds), the AC_VO backoff operation may be completed first (e.g., the backoff counter value becomes 0 and the backoff operation succeeds). While the backoff operation is completed on the first link and the counter value is maintained at 0, the backoff operation (e.g., AC_VO backoff operation) may be completed on the second link. In this case, since the AC_VI backoff operation is successful on the first link and the AC_VO backoff operation is successful on the second link, the STA MLD1 may perform a transmission operation of an AC_VI frame (e.g., a frame including AC_VI data) on the first link and a transmission operation of an AC_VO frame (e.g., a frame including AC_VO data) on the second link at a time when the counter value of the AC_VO backoff operation on the second link becomes 0. That is, the STA 2 of the second link may select to transmit the AC_VO frame. Accordingly, the AC_VI frame and AC_VO frame may be transmitted simultaneously on the first link and the second link. When the lengths of the frames transmitted on the first link and the second link are different and/or when MCSs applied to the frames on the first link and the second link are different, frame transmission completion times of the first link and the second link may be different.

A MAC header of a simultaneously transmitted data frame may include an ACK policy indicator. To set the ACK policy indicator to ML ACK (e.g., '01'), all or some of data frames simultaneously transmitted on the respective links may be EHT frames. The ACK policy indicator may be set to the value indicating ML ACK in the same or similar manner as the exemplary embodiment of FIG. 8. In the exemplary embodiment of FIG. 9, the STA MLD1 may perform the ACK policy indicator setting procedure to perform synchronized transmissions using the first link and the second link. When the STA MLD1 is a STR STA MLD, the STA MLD1 may calculate Tr, which is a difference between the transmission end times of the data frames simultaneously transmitted on the first link and the second link. Tr may be greater than or equal to a preset threshold. In this case, the STA MLD1 may set the ACK policy indicator included in the MAC header of the data frame with a late transmission end time (e.g., data frame transmitted on the first link) to the value indicating ML ACK, and transmit the data frame on the first link. The data frame with an early transmission end time may be transmitted on the second link without padding bit(s).

The AP MLD1 may receive the data frame on the first link and identify that the ACK policy indicator included in the MAC header of the data frame indicates ML ACK. In this case, the AP MLD1 may transmit a response frame (e.g., ML BA frame) including reception status information of the data frame received on the second link with an early transmission end time and reception status information of MPDUs (e.g., some MPDUs) included in the data frame received on the first link up to a time of transmitting the response frame for the data frame received on the second link with an early transmission end time. At a time of starting transmission of the ML BA frame on the second link, the AP1 may receive up to a MPDU 1 with a sequence number (SN) set to 1 and a MPDU 2 with a SN set to 2 on the first link. That is, the AP1 may receive only a portion (e.g., some MPDUs of an A-MPDU) of the frame on the first link. The ML BA frame may include reception status information of the MPDU 1 received on the first link with the SN set to 1, reception status information of the MPDU 2 received on the first link with the SN set to 2, reception status information of the MPDU 1 received on the second link with the SN set to 1, and reception status information of the MPDU 2 received on the second link with the SN set to 2. That is, since reception of a MPDU 3 and a MPDU 4 on the first link is not completed at the time of generation and/or transmission of the ML BA frame, reception status information of the MPDU 3 received on the first link with a SN set 3 and reception status information of the MPDU 4 received on the first link with a SN set 4 may not be included in the ML BA frame. The AP MLD 1 may transmit a BA frame including reception status information of the MPDUs 3 and 4 after a SIFS elapses after completion of reception of the data frame on the first link.

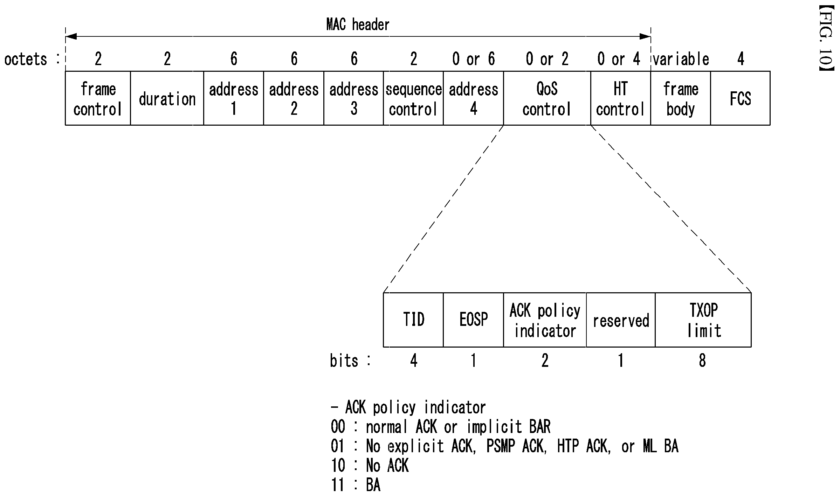

FIG. 10 is a block diagram illustrating a first exemplary embodiment of a frame in a wireless LAN system supporting a multi-link.

As shown in FIG. 10, a MAC header of a frame (e.g., data frame) may include a QoS control field, and the QoS control field may include an ACK policy indicator. The size of the ACK policy indicator may be 2 bits. An ACK policy may vary depending on a value of the ACK policy indicator and a type of PPDU. The ACK policy indicator set to '00' may indicate normal ACK or implicit block ACK request (BAR). If the frame is a non A-MPDU frame, the ACK policy indicator set to '00' may indicate normal ACK. If the frame is a non-A-MPDU frame and a BA agreement is performed, the ACK policy indicator set to '00' may indicate implicit BAR.

The ACK policy indicator set to '01' may indicate No explicit ACK, power save multi-poll (PSMP) ACK, HTP ACK, or ML ACK. If the PPDU is an HE MU PPDU, HE SU PPDU, or HE ER SU PPDU, the ACK policy indicator set to '01' may indicate HTP ACK. If the PPDU is an EHT PPDU, the ACK policy indicator set to '01' may indicate ML ACK.

The ACK policy indicator set to '10' may indicate No ACK, and the ACK policy indicator set to '11' may indicate BA. The method for setting the ACK policy indicator in FIG. 10 may be applied to the above-described exemplary embodiments.

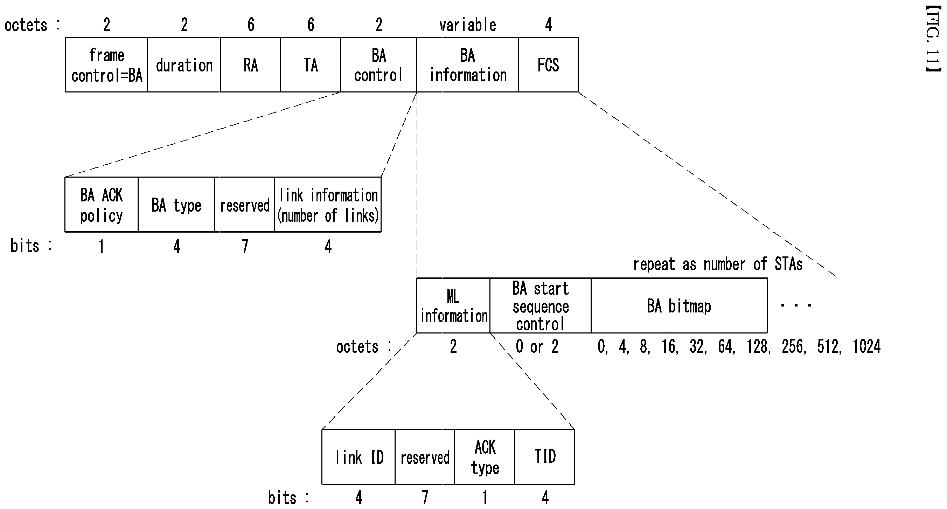

FIG. 11 is a block diagram illustrating a first exemplary embodiment of a response frame in a wireless LAN system supporting a multi-link.

As shown in FIG. 11, when a frame (e.g., data frame, EHT data frame, EHT frame) including the ACK policy indicator set to '01' (e.g., ACK policy indicator indicating ML ACK) is received, a device (e.g., AP MLD, STA MLD, AP, or STA) may transmit reception status information for all or some of MPDUs included in a data frame (e.g., data frame configured in form of an A-MPDU) received on the current link (e.g., first link) on another link (e.g., second link). In this case, an ML BA frame may be used to transmit the reception status information.

A response frame (e.g., ML BA frame) may include a frame control field, a duration field, a receiver address (RA) field, a transmitter address (TA) field, a BA control field, a BA information field, and/or an FCS field. In the BA control field included in the ML BA frame, a BA type may be set to ML ACK (e.g., 12). When the BA type is set to ML ACK, the last four bits of the BA control field may be a link information (link_info) field. The link information field may indicate the number of links. (value indicated by the link information field +1) may indicate the number of links related to the reception status information included in the ML BA frame. (value indicated by the link information field +1) may indicate the number of links including the current link.

For example, when the link information field indicates 1, the number of links related to the reception status information included in the ML BA frame may be 2. The BA information field may include as much BA information as the number of links identified based on the link information field. For example, if the number of links identified based on the link information field is 2, the BA information field may include BA information 1 and BA information 2. Each piece of BA information may include ML information, BA starting sequence control, and BA bitmap. The ML information may include a link ID, reserved bits, ACK type, and traffic identifier (TID).

The link ID may indicate a target link of the ML BA. Combinations of the ACK type and the TID may represent various meanings. For example, a case where the ACK type is 0 and the TID is 14 may indicate 'ALL NACK'. 'ALL NACK' may indicate that errors exist in all MPDUs received on the link indicated by the link ID. A case where the ACK type is 1 and the TID is 14 may indicate `ALL ACK'. `ALL ACK' may indicate that all MPDUs have been successfully received without errors on the link indicated by the link ID. If error(s) occur in some of the MPDUs, the BA bitmap may be used to indicate the error(s).

The exemplary embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those who are skilled in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. A method of a first device, comprising:
performing a first backoff operation for a first access category (AC) on a first link;
performing a second backoff operation for a second AC on a second link;
in response to that the first backoff operation is completed and one or more conditions are satisfied, transmitting a first data frame on the first link, the first data frame including one or more data units corresponding to the first AC and information indicating transmission of a multi-link (ML) block acknowledgment (BA) frame;
in response to that the second backoff operation is completed, transmitting a second data frame on the second link, the second data frame including one or more data units corresponding to the second AC; and
receiving the ML BA frame after transmission of the second data frame on the second link.

2. The method according to claim 1, wherein the ML BA frame includes reception status information for the first data frame and reception status information for the second data frame.

3. The method according to claim 1, wherein when the first data frame is an Extreme High Throughput (EHT) frame, the information is interpreted as indicating transmission of the ML BA frame.

4. The method according to claim 1, wherein the ML BA frame includes reception status information for some data units included in the first data frame and reception status information for all data units included in the second data frame.

5. The method according to claim 4, further comprising: receiving, on the first link, a BA frame including reception status information for remaining data units excluding the some data units among the one or more data units included in the first data frame.

6. The method according to claim 1, wherein the one or more conditions include a condition in which a recipient of the first data frame and a recipient of the second data frame are same, a condition in which the recipient is a non-simultaneous transmit and receive (NSTR) device, a condition in which backoff operations are performed for ACs of data frames transmitted to the recipient, and a condition in which a transmission end time of the first data frame is before a transmission end time of the second data frame.

7. The method according to claim 1, wherein the one or more conditions include at least one of a condition in which a difference between a transmission end time of the first data frame and a transmission end time of the second data frame is less than a threshold or a condition in which the transmission end time of the first data frame is before the transmission end time of the second data frame.

8. The method according to claim 1, wherein the one or more conditions include at least one of a condition in which a difference between a transmission end time of the first data frame and a transmission end time of the second data frame is greater than or equal to a threshold or a condition in which the transmission end time of the first data frame is after the transmission end time of the second data frame.

9. A method of a first device, comprising:
receiving a first data frame on a first link;
receiving a second data frame on a second link;
in response to that the first data frame includes information indicating transmission of a multi-link (ML) block acknowledgment (BA) frame, generating an ML BA frame including first reception status information for the first data frame and second reception status information for the second data frame; and
transmitting the ML BA frame on the second link.

10. The method according to claim 9, wherein when a reception end time of the first data frame is before a reception end time of the second data frame, transmission of the first reception status information is delayed after reception of the second data frame.

11. The method according to claim 9, wherein when the first data frame is an Extreme High Throughput (EHT) frame, the information is interpreted as indicating transmission of the ML BA frame.

12. The method according to claim 9, wherein the first reception status information is reception status information for some data units included in the first data frame, and the second reception status information is reception status information for all data units included in the second data frame.

13. The method according to claim 12, further comprising: transmitting, on the first link, a BA frame including reception status information for remaining data units excluding the some data units among all data units included in the first data frame.

14. A first device comprising:
a processor; and
a memory storing one or more instructions executable by the processor,
wherein the one or more instructions are executed to perform:
performing a first backoff operation for a first access category (AC) on a first link;
performing a second backoff operation for a second AC on a second link;
in response to that the first backoff operation is completed and one or more conditions are satisfied, transmitting a first data frame on the first link, the first data frame including one or more data units corresponding to the first AC and information indicating transmission of a multi-link (ML) block acknowledgment (BA) frame;
in response to that the second backoff operation is completed, transmitting a second data frame on the second link, the second data frame including one or more data units corresponding to the second AC; and
receiving the ML BA frame after transmission of the second data frame on the second link.

15. The first device according to claim 14, wherein the ML BA frame includes reception status information for the first data frame and reception status information for the second data frame.

16. The first device according to claim 14, wherein the ML BA frame includes reception status information for some data units included in the first data frame and reception status information for all data units included in the second data frame.

17. The first device according to claim 16, wherein the one or more instructions are further executed to perform: receiving, on the first link, a BA frame including reception status information for remaining data units excluding the some data units among the one or more data units included in the first data frame.

18. The first device according to claim 14, wherein the one or more conditions include a condition in which a recipient of the first data frame and a recipient of the second data frame are same, a condition in which the recipient is a non-simultaneous transmit and receive (NSTR) device, a condition in which backoff operations are performed for ACs of data frames transmitted to the recipient, and a condition in which a transmission end time of the first data frame is before a transmission end time of the second data frame.

19. The first device according to claim 14, wherein the one or more conditions include at least one of a condition in which a difference between a transmission end time of the first data frame and a transmission end time of the second data frame is less than a threshold or a condition in which the transmission end time of the first data frame is before the transmission end time of the second data frame.

20. The first device according to claim 14, wherein the one or more conditions include at least one of a condition in which a difference between a transmission end time of the first data frame and a transmission end time of the second data frame is greater than or equal to a threshold or a condition in which the transmission end time of the first data frame is after the transmission end time of the second data frame.
